# EUROPEAN PATENT APPLICATION

(11) **EP 4 685 942 A1**
(43) Date of publication of application: **28.01.2026**
(21) Application number: 24822818.1
(22) Date of filing: 14.06.2024
(51) Int. Cl.: H01M 50/148

(54) **COVER PLATE ASSEMBLY AND BATTERY**

(30) Priority: 15.06.2023 CN 202321542430 U; 15.06.2023 CN 202310718096
(71) Applicant: Eve Power Co., Ltd., Jingmen, Hubei 448000 (CN)
(72) Inventor: FANG, Zhenxing, Jingmen, Hubei 448000 (CN); SUN, Fei, Jingmen, Hubei 448000 (CN); GUO, Jiahao, Jingmen, Hubei 448000 (CN); LIU, Liangliang, Jingmen, Hubei 448000 (CN); CHEN, Xianyang, Jingmen, Hubei 448000 (CN); YUAN, Dingding, Jingmen, Hubei 448000 (CN); HE, Wei, Jingmen, Hubei 448000 (CN); LIU, Jincheng, Jingmen, Hubei 448000 (CN)
(74) Representative: Zhu, Puxing
(86) International application number: PCT/CN2024/099337
(87) International publication number: WO 2024/255871

(57) **Abstract**

A cover plate assembly and a battery are provided. The cover plate assembly includes a cover plate and a monitoring assembly. The monitoring assembly includes an acquisition member, a connecting member, and a fixing member. The acquisition member is located inside an accommodating cavity and configured to acquire parameter information inside the housing. The fixing member is mounted on the cover plate and provided with a second mounting hole communicated with a first mounting hole. One end of the connecting member passes through the first mounting hole and the second mounting hole to be electrically connected to the acquisition member, and another end of the connecting member is exposed to the second mounting hole.

## Description

### CROSS-REFERENCE TO RELATED APPLICATION

This application claims priority to and the benefit of Chinese Patent Applications No. 202321542430.7 and No. 202310718096.4, filed with the Chinese Patent Office on June 15, 2023. The entire disclosures of the aforementioned applications are incorporated herein by reference in their entireties.

### TECHNICAL FIELD

The present application relates to a technical field of batteries, and in particular, to a cover plate assembly and a battery.

### BACKGROUND

Since lithium batteries have advantages such as small sizes, high energy density, long service life, the lithium batteries are widely used in industries such as automobiles, electronic products, energy storage systems. During use, the lithium batteries may generate heat and gas due to charge and discharge cycles. A large amount of heat may cause great troubles to use and maintenance of the lithium batteries, and the generated gas may cause battery cells to expand.

### SUMMARY

Internal data inside the batteries in the related art may not be monitored in real time, which is difficult to take response measures to real-time situations.

A cover plate assembly is provided by the embodiments of the present application. The cover plate assembly is mounted on a housing. The housing includes an accommodating cavity. A battery cell is mounted inside the accommodating cavity. The cover plate assembly further includes:
a cover plate mounted on the housing and provided with a first mounting hole communicated with the accommodating cavity; and
a monitoring assembly including an acquisition member, a connecting member, and a fixing member.

The acquisition member is configured to acquire parameter information inside the housing. The fixing member is mounted on the cover plate and provided with a second mounting hole communicated with the first mounting hole. One end of the connecting member passes through the first mounting hole and the second mounting hole to be electrically connected with the acquisition member, and the other end of the connecting member is exposed to the second mounting hole.

A battery is provided by the embodiments of the present application. The battery includes a housing, a battery cell, and the above-mentioned cover plate assembly. The housing includes an accommodating cavity. The battery cell is mounted inside the accommodating cavity.

### BENEFICIAL EFFECTS

In the embodiments of the present application, by providing the monitoring assembly, the acquisition member of the monitoring assembly can acquire the parameter information inside the housing, the parameter information acquired by the acquisition member can be transmitted to the external device through the connecting member of the monitoring assembly, and the connecting member can properly be fixed on the cover plate by the fixing member of the monitoring assembly, so that data inside the battery can be monitored in real time, and reaction measures can be taken in response to real-time situations.

### BRIEF DESCRIPTION OF THE DRAWINGS

FIG. 1 is a schematic structural diagram of a cover plate and a monitoring assembly according to an embodiment of the present application.
FIG. 2 is a schematic exploded diagram of the cover plate and the monitoring assembly according to an embodiment of the present application.
FIG. 3 is a schematic exploded diagram of the monitoring assembly according to an embodiment of the present application.
FIG. 4 is a schematic structural diagram of a cover plate and a monitoring assembly according to an embodiment of the present application.
FIG. 5 is a schematic exploded diagram of the cover plate and the monitoring assembly according to an embodiment of the present application.
FIG. 6 is a schematic structural diagram of a fixing member according to an embodiment of the present application.
FIG. 7 is a schematic cross-sectional diagram of the fixing member according to an embodiment of the present application.
FIG. 8 is a schematic structural diagram of a cover plate and a monitoring assembly according to an embodiment of the present application.
FIG. 9 is a schematic exploded diagram of the cover plate and the monitoring assembly according to an embodiment of the present application.
FIG. 10 is a schematic exploded diagram of the monitoring assembly according to an embodiment of the present application.
FIG. 11 is a schematic structural diagram of a housing and a battery cell according to an embodiment of the present application.
FIG. 12 is a three-dimensional diagram of a battery according to an embodiment of the present application.
FIG. 13 is a schematic exploded diagram of a cover plate assembly according to an embodiment of the present application.
FIG. 14 is a bottom diagram of the cover plate assembly according to an embodiment of the present application.
FIG. 15 is a schematic structural diagram of a signal acquisition device of the cover plate assembly according to an embodiment of the present application.
FIG. 16 is a schematic partial cross-sectional structural diagram of the signal acquisition device of the cover plate assembly according to an embodiment of the present application.
FIG. 17 is a schematic diagram of an inner structure of the signal acquisition device of the cover plate assembly according to an embodiment of the present application.
FIG. 18 is a schematic partial cross-sectional structural diagram of the battery according to an embodiment of the present application.
FIG. 19 is a partial enlarged diagram at A shown in FIG. 18.
FIG. 20 is a schematic exploded diagram of a connecting member and a fixing member shown in FIG. 18.
FIG. 21 is a schematic partial cross-sectional structural diagram of the battery according to an embodiment of the present application.
FIG. 22 is a schematic structural diagram of the battery at a side of a second protective film according to an embodiment of the present application.

### Reference numerals:

100, cover plate assembly; 200, housing; 210, accommodating cavity; 300, battery cell; 110, cover plate; 111, first mounting hole; 112, second sinking part; 113, second sealing element; 114, first via hole; 115, second sealing element; 116, second via hole; 117, third sealing element; 118, fourth sealing element; 119, third mounting hole; 120, monitoring assembly; 121, acquisition member; 1211, temperature acquisition member; 1212, stress acquisition member; 1213, gas composition acquisition member; 122, connecting member; 1221, base part; 1222, first connecting part; 1223, second connecting part; 1224, first protrusion; 1225, first sealing element; 1226, sub-connecting member; 1227, second protrusion; 123, fixing member; 1231, second mounting hole; 1232, first fixing part; 1233, second fixing part; 1234, transition part; 124, signal acquisition device; 1241, body; 1242, accommodating space; 1243, data processor; 1244, connecting line; 1245, power supply; 1246, air pressure sensor; 1247, vent hole; 1248, gas-permeable membrane; 125, wireless transmitting module; 126, first protective film; 127, second protective film; 1271, hollow areal 130, lower plastic member; 131, fourth mounting hole; 132, first sinking part; 140, pole post; 150, connecting sheet; 151, notch; 160, liquid injection hole; 170, explosion-proof valve.

### DETAILED DESCRIPTION

In description of the present application, it should be understood that, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements or an interaction between the two elements, which can be understood by those skilled in the art according to specific situations.

In the present application, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on," "above," or "on top of" a second feature may include an embodiment in which the first feature is right or obliquely "on," "above," or "on top of" the second feature, or just means that the first feature is at a height higher than that of the second feature; while a first feature "below," "under," or "on bottom of" a second feature may include an embodiment in which the first feature is right or obliquely "below," "under," or "on bottom of" the second feature, or just means that the first feature is at a height lower than that of the second feature.

In description of the present application, it should be understood that orientational or positional relationships represented by directional terms mentioned in the present application, such as "up", "down", "left", "right", "front", "rear", etc., are orientational or positional relationships based on the drawings, and are merely for the convenience of describing the present application and simplifying the description, rather than indicating or implying that the device or element is intended to have a particular orientation, or is constructed and operated in a particular orientation, and therefore, should not be interpreted as a limitation of the application. In addition, the terms "first" and "second" are used to distinguish in description and have no special meaning.

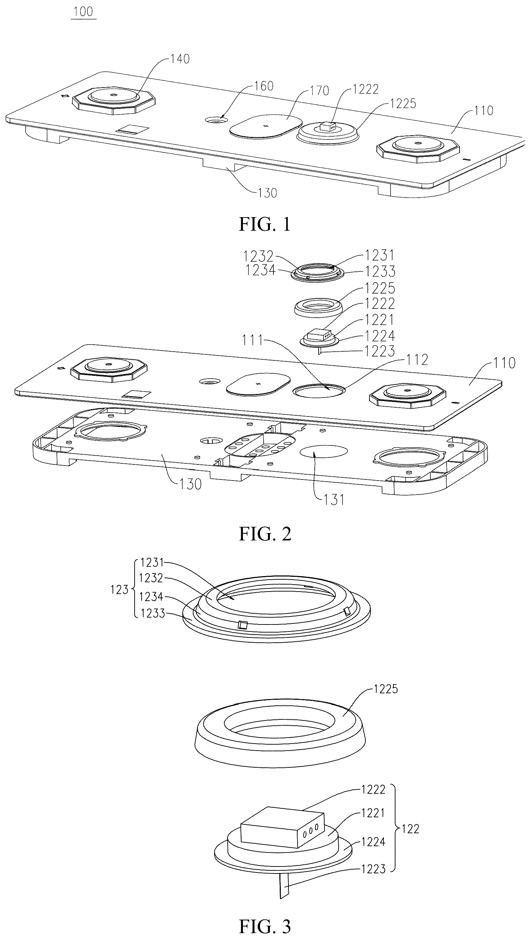

Referring to FIG. 1, FIG. 2, and FIG. 10, a cover plate assembly 100 is provided by the embodiments of the present application. The cover plate assembly 100 is mounted on a housing 100. The cover plate assembly 100 includes a cover plate 110 and a monitoring assembly 120.

The housing 200 includes an accommodating cavity 210 configured to accommodate a battery cell 300. The battery cell 300 is fixed inside the accommodating cavity 210. A side of the housing 200 is provided with an opening communicated with the accommodating cavity 210. The cover plate 110 is mounted on the housing 200. Specifically, the cover plate 110 covers a side of the housing 200 where the opening is provided. The cover plate 110 is provided with a first mounting hole 111 communicated with the accommodating cavity 210.

The monitoring assembly 120 includes an acquisition member 121, a connecting member 122, and a fixing member 123. The acquisition member 121 is located inside the accommodating cavity 210 to acquire parameter information inside the housing 200. The parameter information includes a temperature inside the battery cell 300, a pressure inside the housing 200, a gas composition inside the housing 200, etc. The pressure refers to a pressure of the gas inside the housing 200 against the housing 200. The fixing member 123 is mounted on the cover plate 110 and provided with a second mounting hole 1231 communicated with the first mounting hole 111. The connecting member 122 passes through the first mounting hole 111 and the second mounting hole 1231. One end of the connecting member 122 is electrically connected to the acquisition member 121, and the other end of the connecting member 122 is exposed to the second mounting hole 1231 to transmit the parameter information acquired by the acquisition member 121 to an external device.

In the present application, by providing the monitoring assembly 120, the acquisition member 121 of the monitoring assembly 120 can acquire the parameter information inside the housing 200, and the parameter information acquired by the acquisition member 121 can be transmitted to the external device through the connecting member 122 of the monitoring assembly 120, and the connecting member 122 can properly be fixed on the cover plate 110 by the fixing member 123 of the monitoring assembly 120, so that data inside the battery can be monitored in real time, and reaction measures can be taken in response to real-time situations.

Referring to FIG. 1, FIG. 2, and FIG. 11, in one embodiment, a cover plate assembly 100 is mounted on a housing 100. The cover plate assembly 100 includes a cover plate 110 and a monitoring assembly 120. The housing 200 includes an accommodating cavity 210. A battery cell 300 is fixed inside the accommodating cavity 210. A side of the housing 200 is provided with an opening communicated with the accommodating cavity 210. The cover plate 110 covers a side of the housing 200 where the opening is provided. The cover plate 110 is provided with a first mounting hole 111 communicated with the accommodating cavity 210. The battery cell 300 is mounted inside the housing 200. Two battery cells 300 can be mounted inside the housing 200, and the two battery cells 300 are arranged in parallel.

The monitoring assembly 120 includes an acquisition member 121, a connecting member 122, and a fixing member 123. The acquisition member 121 is located inside the accommodating cavity 210 to acquire parameter information inside the housing 200. The parameter information includes a temperature inside the battery cell 300 and a pressure inside the housing 200. The acquisition member 121 includes a plurality of sensors and a plurality of connecting lines 1244. The plurality of sensors include at least a temperature sensor and a pressure sensor. The plurality of connecting lines 1244 are configured to connect the sensors and the connecting member 122. The fixing member 123 is mounted on the cover plate 110 and provided with a second mounting hole 1231 communicated with the first mounting hole 111. The connecting member 122 passes through the first mounting hole 111 and the second mounting hole 1231. One end of the connecting member 122 is electrically connected to the acquisition member 121 (e.g., the connecting line), and the other end of the connecting member 122 is exposed to the second mounting hole 1231 to transmit the parameter information acquired by the acquisition member 121 to an external device. In some embodiments, the sensors are attached to the battery cell 300.

Referring to FIG. 3, the connecting member 122 includes a base part 1221, a first connecting part 1222, and a second connecting part 1223. The base part 1221 is located inside the second mounting hole 1231. The first connecting part 1222 is connected to one end of the base part 1221 away from the battery cell 300. The first connecting part 1222 is exposed to the second mounting hole 1231. The second connecting part 1223 is connected to the other end of the base part 1221 adjacent to the battery cell 300 and extends into the first mounting hole 111. The second connecting part 1223 is configured to be electrically connected to the acquisition member 121 and the first connecting part 1222. The first connecting part 1222 is configured to be connected to the external device, as a connection terminal, to transmit the information acquired by the acquisition member 121 to the external device.

In some embodiments, the base part 1221 is provided with a communicating channel inside. One end of the second connecting part 1223 extends into the first mounting hole 111 to be connected to the acquisition member 121, and the other end of the second connecting part 1223 is connected to the first connecting part 1222 inside the communicating channel. One end of the first connecting part 1222 is exposed to the second mounting hole 1231 to be connected with the external device easily.

In some embodiments, the connecting member 122 may transmit the information by wireless transmission in addition to the above-described wired connection. For example, the first connecting part 1222 is provided with a wireless transmitting module to transmit the information through the wireless transmission. The wireless transmitting module may include a radio frequency chip.

In some embodiments, an outer side of the base part 1221 is provided with a first protrusion 1224. The connecting member 122 includes a first sealing element 1225. The fixing member 123 includes a first fixing part 1232, a second fixing part 1233, and a transition part 1234. The first fixing part 1232 surrounds the base part 1221. The first fixing part 1232 is located on a side of the first protrusion 1224 away from the cover plate 110. The first fixing part 1232 is provided with the second mounting hole 1231. The second fixing part 1233 surrounds the base part 1221 and is connected to the cover plate 110. The transition part 1234 is connected between an outer peripheral edge of the first fixing part 1232 and an inner peripheral edge of the second fixing part 1233. The transition part 1234 is provided with a through hole communicated with the second mounting hole 1231.

The first sealing element 1225 is sleeved on the outer side of the base part 1221 and connected between the first protrusion 1224 and the fixing member 123. Specifically, the first sealing element 1225 fills the through hole, a space between the first protrusion 1224 and the cover plate 110, and a space between the first protrusion 1224 and the first fixing part 1232, the second fixing part 1233, and the transition part 1234. Since the first sealing element 1225 fills between the above-mentioned components, the first sealing element plays a good insulating sealing function.

In some embodiments, The first sealing element 1225 is further laid on outer surfaces of the first fixing part 1232, a part of the second fixing part 1233, and the transition part 1234 to protect the parts of the above-described components where the first sealing element 1225 is laid from being corrosion. In other embodiments, an entire outer side surface of the second fixing part 1233 is laid with the first sealing element 1225. That is, an outer side surface where the second fixing part 1233 is welded with the cover plate 110 is further provided with the first sealing element 1225, so that all the outer side surfaces of the fixing member 123 are protected by the first sealing element 1225.

In some embodiments, the cover plate 110 is provided with a second sinking part 112 surrounding a periphery of the first mounting hole 111. The second fixing part 1233 is located inside the second sinking part 112 and welded with the cover plate 110. In some embodiments, a side wall of the second fixing part 1233 abuts against a side wall of the second sinking part 112, so that the second fixing part 1233 can be limited by the second sinking part 112. While the second fixing part 1233 and the cover plate 110 are welded, the fixation between the second fixing part 1233 and the cover plate 110 in a horizontal direction is further strengthened. In some embodiments, the second fixing part 1233 is located inside the second sinking part 112, and a top surface of the second fixing part 1233 is flush with a top surface of the second sinking part 112 to improve the smoothness of a connection position between the cover plate 110 and the second fixing part 1233.

In some embodiments, the housing 200 is further provided with a pole post 140, a liquid injection hole 160, an explosion-proof valve 170, etc. The cover plate assembly further includes a lower plastic member 130 disposed on a side of the cover plate 110 away from the first connecting part 1222. The lower plastic member 130 is provided with a plurality of fourth mounting holes 131 corresponding to the pole post 140 and the first mounting hole 111.

In some embodiments, the first sealing element 1225, the first fixing part 1232, a part of the second fixing part 1233, the transition part 1234, and the fixing member 123 are integrally injection molded. Specifically, after being assembled, the above-described components except the first sealing element 1225 are placed inside an injection mold, then an injection molding material is injected into the injection mold, and the injection molding material solidifies to form the first sealing element 1225 capable of fixing the above-described structure. The first sealing element 1225, the first fixing part 1232, a part of the second fixing part 1233, the transition part 1234, and the fixing member 123 are integrally injection molded, so that the above-described structure can be pre-assembled and then mounted to the cover plate 110 after being assembled, thereby improving a mounting speed.

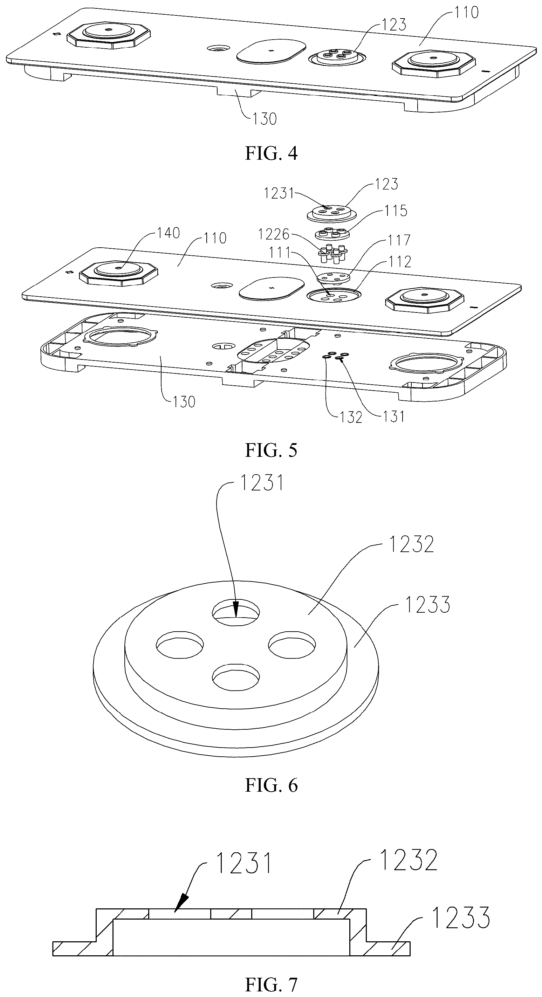

Referring to FIG. 4, FIG. 5, FIG. 6, FIG. 7, and FIG. 11, in one embodiment, a cover plate assembly 100 is mounted on a housing 100. The cover plate assembly 100 includes a cover plate 110 and a monitoring assembly 120. The housing 200 includes an accommodating cavity 210. A battery cell 300 is fixed inside the accommodating cavity 210. A side of the housing 200 is provided with an opening communicated with the accommodating cavity 210. The cover plate 110 is provided with first mounting holes 111 communicated with the accommodating cavity 210.

The monitoring assembly 120 includes an acquisition member 121, a connecting member 122, and a fixing member 123. The acquisition member 121 is located inside the accommodating cavity 210 and is configured to acquire parameter information inside the housing 200. The parameter information includes a temperature inside the battery cell 300 and a pressure inside the housing 200. The acquisition member 121 includes a plurality of sensors and a plurality of connecting lines 1244. The plurality of sensors include at least a temperature sensor and a pressure sensor. The plurality of connecting lines 1244 are configured to connect the sensors and the connecting member 122. The fixing member 123 is mounted on the cover plate 110 and provided with second mounting holes 1231 communicated with the first mounting holes 111. The connecting member 122 passes through the first mounting holes 111 and the second mounting holes 1231. One end of the connecting member 122 is electrically connected to the acquisition member 121, and the other end of the connecting member 122 is exposed to the second mounting holes 1231 to transmit the parameter information acquired by the acquisition member 121 to an external device. In some embodiments, the sensors are attached to the battery cell 300.

The connecting member 122 includes a plurality of sub-connecting members 1226 insulated from each other. The cover plate 110 is provided with a plurality of first mounting holes 111 corresponding to the plurality of sub-connecting members 1226. The fixing member 123 is provided with a plurality of second mounting holes 1231 corresponding to the plurality of sub-connecting members 1226. One end of each of the sub-connecting members 1226 is exposed to a corresponding one of the second mounting holes 1231, and the other end of each of the sub-connecting members 1226 extends into a corresponding one of the first mounting holes 111 to be electrically connected to the acquisition member 121. The sub-connecting members 1226 are insulated from each other, so that each of the sub-connecting members 1226 can transmit a different signal, the connecting member 122 can transmit a plurality of different signals simultaneously without interference between the different signals.

In some embodiments, the cover plate 110 is provided with a second sinking part 112 surrounding the first mounting holes 111. The fixing member 123 includes a first fixing part 1232 and a second fixing part 1233. The first fixing part 1232 is provided with a plurality of second mounting holes 1231. The second fixing part 1233 surrounds the first fixing part 1232 and is located inside the second sinking part 112. An outer peripheral edge of the second fixing part 1233 extends to be welded to the cover plate 110.

In some embodiments, the cover plate assembly 100 further includes a second sealing element 115 and a third sealing element 117. The second sealing element 115 is located between the first fixing part 1232 and the plurality of sub-connecting members 1226. the second sealing element 115 is provided with a plurality of first protrusions 1224. Each of the first protrusions 1224 is provided with a plurality of first via holes 114 communicated with the second mounting holes 1231. Each of the first protrusions 1224 is mounted inside a corresponding one of the second mounting holes 1231. One end of each of the sub-connecting members 1226 is disposed inside a corresponding one of the first via holes 114 and exposed to the corresponding one of the first via holes 114, so that the sub-connecting members 1226 are insulated from the fixing member 123. The second sealing element 115 is located between the plurality of sub-connecting members 1226 and the cover plate 110. The third sealing element 117 is provided with a plurality of second protrusions. Each of the second protrusions is provided with a plurality of second via holes 116. Each of the second protrusions is mounted inside a corresponding one of the first mounting holes 111. The other end of each of the sub-connecting members 1226 extends into a corresponding one of the second via holes 116 to be electrically connected to the acquisition member 121, so that the connecting member 122 is insulated from the fixing member 123 and the cover plate 110.

In some embodiments, an outer side of each of the sub-connecting members 1226 is provided with a second protrusion 1227. The second protrusion 1227 is located between the second sealing element 115 and the third sealing element 117. Specifically, the second sealing element 115 is provided with a plurality of accommodating grooves. Each of the accommodating grooves surrounds a periphery of a corresponding one of the first via holes 114. The second protrusion 1227 of each of the sub-connecting members 1226 is located inside a corresponding one of the accommodating grooves. The second protrusion 1227 abuts against the first fixing part 1232 by the second sealing element 115 and is insulated from the fixing part 1232.

In some embodiments, a size of the second protrusion 1227 is greater than a size of a corresponding one of the second via holes 116 to be limited by the third sealing element 117. With the above-mentioned arrangement, the third sealing element 117 can be firmly limited between the second sealing element 115 and the third sealing element 117.

In some embodiments, the housing 200 is further provided with a pole post 140, a liquid injection hole 160, an explosion-proof valve 170, etc. The battery further includes a lower plastic member 130 disposed on a side of the cover plate 110 away from the fixing member 123. The lower plastic member 130 is provided with a plurality of fourth mounting holes 131 corresponding to the pole post 140 and the first mounting holes 111.

In some embodiments, the sub-connecting members 1226 are plug-in members. The plug-in members include, but not limited to, metal plug-in members, such as metal pins.

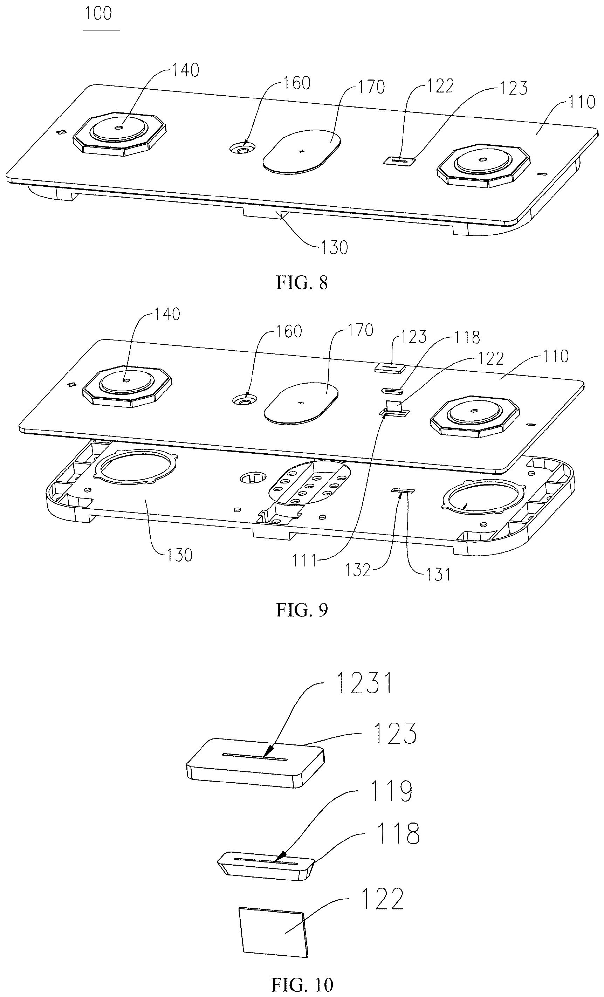

Referring to FIG. 8, FIG. 9, FIG. 10, and FIG. 11, in one embodiment, a cover plate assembly 100 is mounted on a housing 100. The cover plate assembly 100 includes a cover plate 110 and a monitoring assembly 120. The housing 200 includes an accommodating cavity 210. A battery cell 300 is fixed inside the accommodating cavity 210. A side of the housing 200 is provided with an opening communicated with the accommodating cavity 210. The cover plate 110 covers a side of the housing 200 where the opening is provided. The cover plate 110 is provided with a first mounting hole 111 communicated with the accommodating cavity 210.

The monitoring assembly 120 includes an acquisition member 121, a connecting member 122, and a fixing member 123. The acquisition member 121 is located inside the accommodating cavity 210 to acquire parameter information inside the housing 200. The parameter information includes a temperature inside the battery cell 300 and a pressure inside the housing 200. The acquisition member 121 includes a plurality of sensors and a plurality of connecting lines 1244. The plurality of sensors include at least a temperature sensor and a pressure sensor. The plurality of connecting lines 1244 are configured to connect the sensors and the connecting member 122. The fixing member 123 is mounted on the cover plate 110 and provided with a second mounting hole 1231 communicated with the first mounting hole 111. The connecting member 122 passes through the first mounting hole 111 and the second mounting hole 1231. One end of the connecting member 122 is electrically connected to the acquisition member 121, and the other end of the connecting member 122 is exposed to the second mounting hole 1231 to transmit the parameter information acquired by the acquisition member 121 to an external device. In some embodiments, the sensors are attached to the battery cell 300.

An aperture of the first mounting hole 111 gradually decreases along a direction from the cover plate 110 toward the acquisition member 121. The battery further includes a fourth sealing element 118 located inside the first mounting hole 111. A shape of the fourth sealing element 118 corresponds to a shape of the first mounting hole 111. The fourth sealing element 118 abuts against a hole wall of the first mounting hole 111. The fourth sealing element 118 is provided with a third mounting hole 119, and the fourth sealing element 118 has elasticity. The connecting member 122 is disposed behind the fourth sealing element 118, so that the first sealing element 1225 can press the connecting member 122, thereby ensuring good stability and sealing performance.

The cover plate 110 is provided with a second sinking part 112 surrounding a periphery of the first mounting hole 111. The fixing member 123 is located inside the second sinking part 112 and covers the sealing element. An outer peripheral edge of the fixing member 123 is connected to the cover plate 110.

In some embodiments, the cover plate assembly further includes a lower plastic member 130 provided with a fourth mounting hole 131. A hole wall of the fourth mounting hole 131 is provided with a first sinking part 132. A part of the cover plate 110 is located inside the first sinking part 132 to prevent relative displacement between the cover plate 110 and the first sinking part 132. The connecting member 122 passes through the fourth mounting hole 131 to be electrically connected to the connection lines 1244.

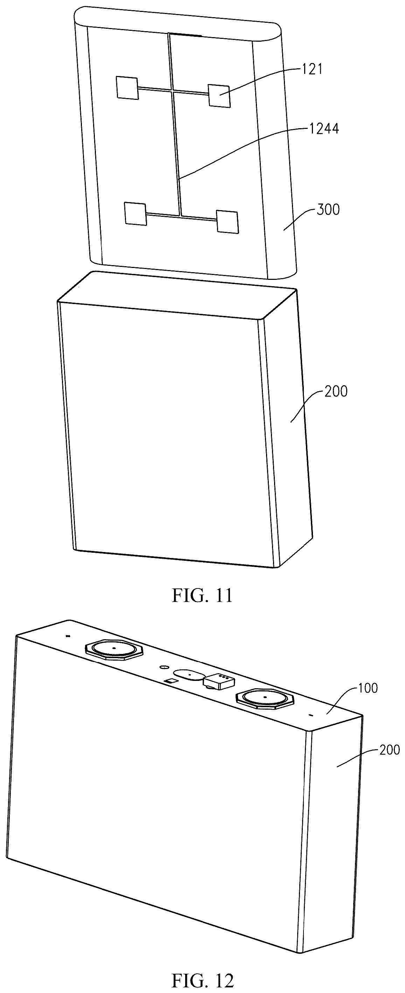

In some embodiments, referring to FIG. 11, FIG. 13, FIG. 18, and FIG. 19. The cover plate assembly 100 is located on a top of the battery cell 300. The cover plate assembly 100 is connected to the battery cell 300. The monitoring assembly 120 further includes a signal acquisition device 124 disposed on a side of the cover plate 110 facing the battery cell 300. The signal acquisition device 124 is connected to the acquisition member 121 and the connecting member 122.

In some embodiments, the signal acquisition device 124 is integrally assembled with the cover plate 110 through the connecting member 122 and the fixing member 123, and the cover plate assembly 100 is integrally installed and disassembled, so that the operation is simple. The signal acquisition device 124 is isolated from an electrolyte inside the battery to protect the signal acquisition device 124, thereby improving the reliability of the signal acquisition device 124.

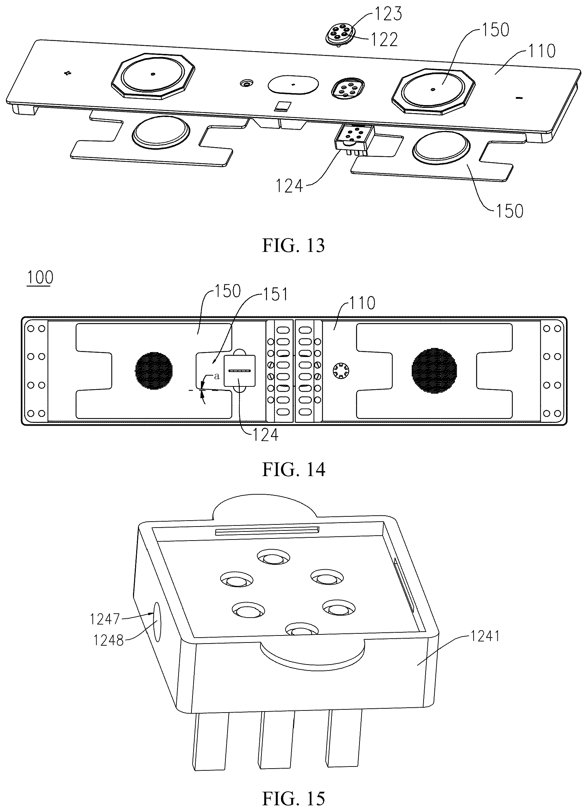

In some embodiments, referring to FIG. 15, FIG. 16, and FIG. 17, the signal acquisition device 124 includes a body 1241 and a data processor 1243. The body 1241 has a cubic structure. The body 1241 is provided with an accommodating space 1242 inside. The accommodating space 1242 may have a cubic structure or a T-shaped space. The data processor 1243 is disposed inside the accommodation space 1242. The data processor 1243 is connected to the acquisition member 121 by the connecting lines 1244. The data processor 1243 is configured to convert signals acquired by the acquisition device 121 into electrical signals.

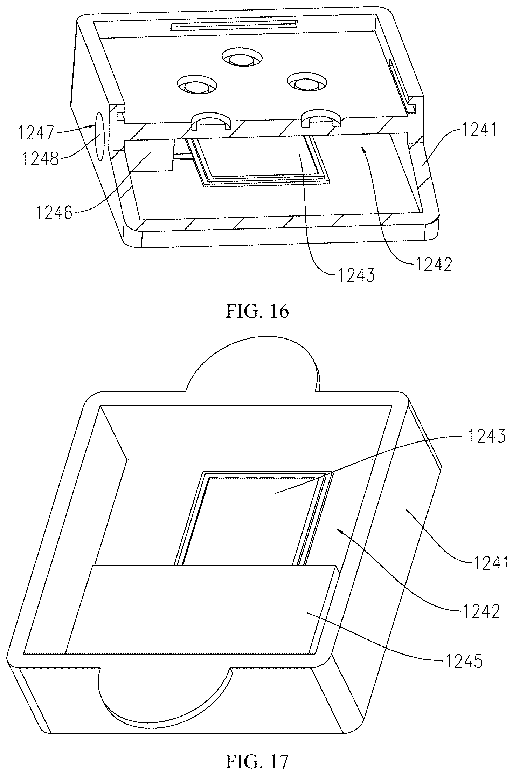

In some embodiments, referring to FIG. 17, the signal acquisition device 124 further includes a power source 1245 electrically connected to the data processor 1243. The power source 1245 may be a lithium primary battery. The power supply 1245 is disposed inside the accommodating space 1242. The power supply 1245 is electrically connected to the data processor 1243, and the power supply 1245 supplies power to the data processor 1243.

In the embodiments of the present application, referring to FIG. 16 and FIG. 17, the signal acquisition device 124 includes the body 1241, the data processor 1243, and the power supply 1245. The data processor 1243 and the power supply 1245 are integrated inside the body 1241. The signal acquisition device 124 has a simple structure and good integration, which is convenient to assemble with the cover plate assembly 100.

In other embodiments, the data processor 1243 is electrically connected to a positive electrode and a negative electrode of the battery. By supplying power to the data processor 1243 through the battery, there is no need to provide an additional power supply 1245, thereby reducing equipment investment and cost.

In some embodiments, the accommodating space 1242 is filled with a sealant. The body 1241 is provided with a glue injection hole, and the sealant is injected into the accommodating space 1242 through the glue injection hole. A volume of the sealant accounts for 70% to 99% of a volume of the accommodation space 1242.

In the embodiments of the present application, by filling the sealant inside the accommodating space 1242, electronic components inside the accommodating space 1242 are immersed in the sealant, thereby reducing a probability of erosion of the electronic components by an electrolyte, and improving sealing performance of the signal acquisition device 124.

In some embodiments, referring to FIG. 15 and FIG. 16, the signal acquisition device 124 further includes an air pressure sensor 1246 disposed inside the accommodating space 1242. The air pressure sensor 1246 is connected to the data processor 1243. The air pressure sensor 1246 is configured to acquire an air pressure value inside the housing 200.

In the embodiments of the present application, the signal acquisition device 124 is provided with the air pressure sensor 1246 to monitor the air pressure inside the battery in real time and comprehensively.

In some embodiments, referring to FIG. 16, the body 1241 is provided with a vent hole 1247 and a gas-permeable membrane 1248. The vent hole 1247 is provided on a side wall of the body 1241 adjacent to the explosion-proof valve 170. A shape of the vent hole 1247 may be circular or square. The gas-permeable membrane 1248 is connected to the body 1241, and the gas-permeable membrane 1248 blocks the vent hole 1247. The gas-permeable membrane 1248 is capable of breathing and insulating the electrolyte. The air pressure sensor 1246 is disposed inside the accommodating space 1242. The air pressure sensor 1246 and the vent hole 1247 are arranged opposite to each other. The air pressure sensor 1246 is configured to detect the air pressure value inside the battery.

In the embodiments of the present application, the air-permeable membrane 1248 is capable of isolating the electrolyte to prevent the electrolyte from entering the signal acquisition device 124. Furthermore, the gas can enter the air pressure sensor 1246 through the air-permeable membrane 1248 to ensure a monitoring effect of the air pressure sensor 1246.

In some embodiments, the body 1241 is provided with a snap element, the cover plate 110 is provided with a snap fitting element, and the snap element is snap-connected with the snap fitting element. The snap element may be a snap groove, the snap fitting element may be a snap buckle, and the snap buckle and the snap groove cooperate to realize detachable connection between the cover plate 110 and the signal acquisition device 124, thereby facilitating convenient installation and disassembly of the signal acquisition device 124.

In other embodiments, the body 1241 is a plastic body 1241, and the plastic body 1241 and the cover plate 110 are fixedly connected by hot melting. Optionally, the body 1241 may be welded or adhesively fixed to the cover plate 110.

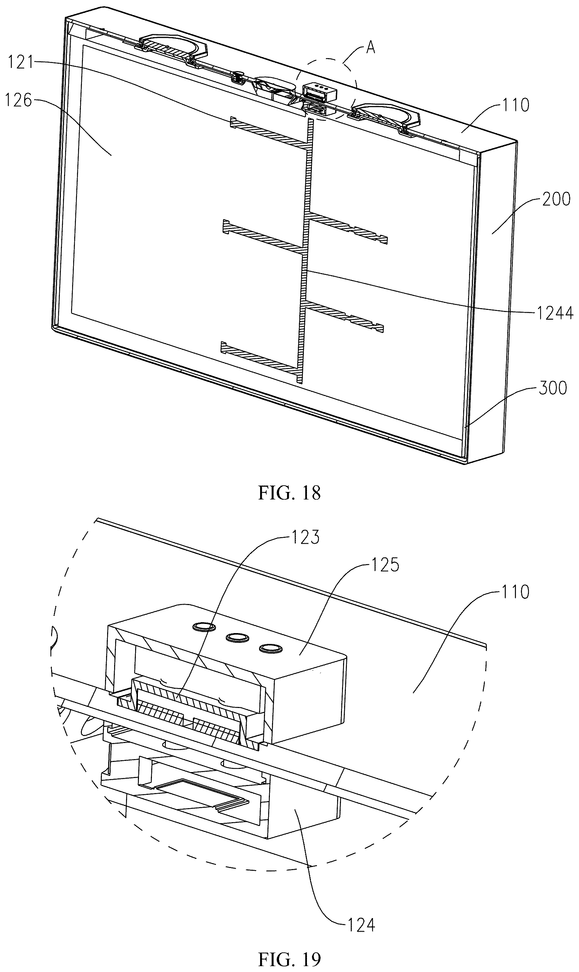

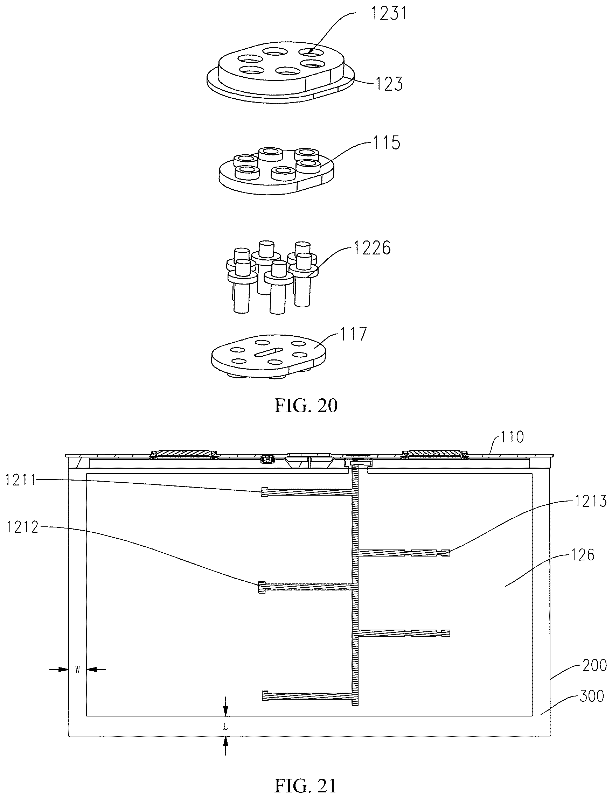

In some embodiments, referring to FIG. 18. FIG. 19, and FIG. 20, the monitoring assembly 120 further includes a wireless transmitting module 125 connected to the signal acquisition device 124. The wireless transmitting module 125 is connected to the signal acquisition device 124 through the connecting member 122 and the fixing member 123.

In the embodiments of the present application, the signal acquisition device 124 converts the acquired signal into an electrical signal, and then the electrical signal is transmitted through the wireless transmitting module 125. By adopting the wireless transmission, wiring is reduced, and installation and operation are simple. The power supply 1245 further supplies power to the wireless transmitting module 125, and there is no need to provide a separate power supply module, which is beneficial to integration and saves space.

In other embodiments, the signal acquisition device 124 is connected to an external battery control system through wired transmission, and the wired transmission has good stability.

In some embodiments, referring to FIG. 13 and FIG. 14, the cover plate assembly 100 further includes a pole post 140 and a connecting sheet 150,

In this embodiment, the cover plate 110 has a rectangular plate structure. The cover plate 110 may be made of plastic. The cover plate 110 is provided with a through hole through which the pole post 140 passes. The cover plate 110 is further mounted with the explosion-proof valve 170.

In this embodiment, the pole post 140 includes a positive pole post and a negative pole post mounted on the cover plate 110.

In this embodiment, the connecting sheet 150 is disposed on a side of the cover plate 110 facing the battery cell 300. The connecting sheet 150 is configured to connect the pole post 140 and a pole tab of the battery cell 300. A side of the connecting sheet 150 adjacent to the signal acquisition device 124 is provided with a notch 151. The signal acquisition device 124 is partially located inside the notch 151.

In the embodiments of the present application, in order to reasonably utilize a limited space of the cover plate 110, the connecting sheet 150 is provided with the notch 151 to avoid interference between the connecting sheet 150 and the signal acquisition device 124, and the structure is compact and a spatial layout is reasonable.

In some embodiments, referring to FIG. 14, the notch 151 is in a flared shape, and an opening size of one end of the notch 151 adjacent to the signal acquisition device 124 is greater than an opening size of the other end of the notch 151.

In some embodiments, referring to FIG. 14, an inclination angle of a side wall of the notch 151 on the connecting sheet 150330 is defined as a, where a satisfies 3°≤a≤30°. The connecting sheet 150 has a transverse "H" shape. A value of the a may be 3°, 5°, 8°, 10°, 15°, 18°, 22°, 27°, or 30°.

In the embodiments of the present application, the notch 151 is in a flared shape, and the side wall of the notch 151 on the connecting sheet 150 is defined the inclined angle, thereby ensuring a structural strength of the connecting sheet 150 while satisfying an installation space of the signal acquisition device 124.

Referring to FIG. 11, a battery is provided by the embodiments of the present application. The battery includes a housing 200, a battery cell 300, and the cover plate assembly in any one of the above-mentioned embodiments. The housing 200 includes an accommodating cavity 210. The battery cell 300 is mounted inside the accommodating cavity 210.

In some embodiments, the connecting sheet 122 includes, but is not limited to, a circuit board, such as a flexible circuit board. The connecting lines 1244 are soldered to pads of the circuit board.

In some embodiments, referring to FIG. 18, FIG. 21, and FIG. 22, the monitoring assembly 120 further includes a first protective film 126 arranged on a side of the battery cell 300. A side surface of the first protective film 126 is attached on a side surface of the battery cell 300. The acquisition member 121 is fixed on a side of the first protective film 126 away from the battery cell 300. The acquisition member 121 is configured to acquire parameter information inside the battery. The parameter information may include at least one of temperature information, stress information, and gas composition information.

In the embodiments of the present application, the battery cell 300 and the acquisition member 121 are separated by the first protective film 126, thereby reducing the probability that the acquisition member 121 pierces a separator of the battery cell 300, protecting the battery cell, and improving the reliability of the battery cell 300.

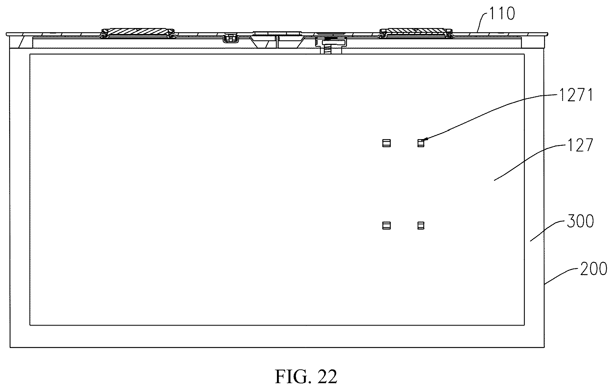

In some embodiments, referring to FIG. 22, the monitoring assembly 120 further includes a second protective film 127. The first protective film 126 and the second protective film 127 may be arranged between two battery cells. The first protective film 126 is attached to a side surface of one of the two battery cells 300, and the second protective film 127 is attached to a side surface of the other one of the two battery cells 300. The second protective film 127 is attached to the first protective film 126. The first protective film 126 and the second protective film 127 are adhered together. A plurality of acquisition members 121 are arranged between the first protective film 126 and the second protective film 127. The acquisition members 121 are fixed by the first protective film 126 and the second protective film 127.

In the embodiments of the present application, the acquisition members 121 are fixed between the first protective film 126 and the second protective film 127, and the mounting and fixing of the acquisition members 121 are simple. After being assembled with the first protective film 126 and the second protective film 127, the acquisition members 121 are mounted inside the battery, so that the installation operation is simple. The acquisition members 121 and the battery cells 300 on both sides of the acquisition members 121 are separated by the first protective film 126 or the second protective film 127, thereby reducing the probability of the acquisition members 121 piercing the separator of the battery cells 300, protecting the battery cells 300, and improving the reliability of the battery cells 300.

In some embodiments, the acquisition members 121 include at least one of a temperature acquisition member 1211, a stress acquisition member 1212, and a gas composition acquisition member 1213. The temperature acquisition member 1211 is configured to acquire a temperature parameter inside the battery. The stress acquisition member 1212 is configured to acquire a stress parameter inside the battery. The gas composition acquisition member 1213 is configured to acquire a gas composition parameter inside the battery. A type and a number of the acquisition members 121 may be set according to requirements, which is not specifically limited by this embodiment. The number of the temperature acquisition member 1211, the stress acquisition member 1212, and the gas composition acquisition member 1213 may be one or more.

In the embodiments of the present application, referring to FIG. 21, the acquisition members 121 include at least one of the temperature acquisition member 1211, the stress acquisition member 1212, and the gas composition acquisition member 1213. A variety of the acquisition member 121 is rich, and the monitoring inside the battery is comprehensive, thereby improving the safety of the battery.

In some embodiments, referring to FIG. 21, the plurality of acquisition members 121 are arranged in a middle area of the first protective film 126. For example, the temperature acquisition member 1211, the stress acquisition member 1212, and the gas component acquisition member 1213 are respectively arranged in the middle area of the first protective film 126. In other embodiments, the plurality of acquisition members 121 may be respectively arranged in an area adjacent to an edge of the battery cell 300 as necessary.

In the embodiments of the present application, the plurality of acquisition members 121 are arranged in the middle area of the first protective film 126 to acquire the parameter information of a middle area of the battery, and the data acquisition results are accurate.

In some embodiments, referring to FIG. 21, the acquisition members 121 include the temperature acquisition member 1211, the stress acquisition member 1212, and the gas composition acquisition member 1213. The temperature acquisition member 1211 and the stress acquisition member 1212 are arranged at intervals along a thickness direction of the first protective film 126. The temperature acquisition member 1211 and the gas composition acquisition member 1213 are arranged at intervals along a length direction of the first protective film 126.

In the embodiments of the present application, the temperature acquisition member 1211, the stress acquisition member 1212, and the gas composition acquisition member 1213 are arranged at intervals. The temperature acquisition member 1211 and the stress acquisition member 1212 are located at a same side, and the gas composition acquisition member 1213 is located at the other side. An arrangement of the plurality of acquisition members 121 is reasonable, which facilitates the wiring layout of each of the acquisition members 121.

In some embodiments, referring to FIG. 22, the plurality of acquisition members 121 include the composition acquisition member 1213. The second protective film 127 is provided with a hollow area 1271. The second protective film 127 located in the hollow area 1271 is removed, and an acquisition end of the gas composition acquisition member 1213 is located inside the hollow area 1271. The acquisition end of the gas composition acquisition member 1213 is exposed to air, and can be fully contacted with the gas inside the battery, so that the gas composition inside the battery can be acquired, and an accuracy of acquisition results can be ensured.

In some embodiments, any one or a combination of two of the first protective film 126 and the second protective film 127 includes a polypropylene (PP) film layer or a polyimide (PI) film layer. The first protective film 126 and the second protective film 127 are the same film layer, such as the PP film layer or the PI film layer. The first protective film 126 and the second protective film 127 are different film layers, and the first protective film 126 is the PP film layer, and the second protective film 127 is the PI film layer.

In the embodiments of the present application, the first protective film 126 and the second protective film 127 are PP film layer or PI film layer, and have characteristics of good insulation and corrosion resistance.

In some embodiments, a length of the first protective film 126 is equal to a length of the second protective film 127.

In some embodiments, a width of the first protective film 126 is equal to a width of the second protective film 127.

In some embodiments, a thickness of the first protective film 126 is equal to a thickness of the second protective film 127.

In the embodiments of the present application, a size of the first protective film 126 is equal to a size of the second protective film 127. A projection of the second protective film 127 in a plane on which the first protective film 126 is located overlaps the first protective film 126. The first protective film 126 and the second protective film 127 are easily cut and processed. The first protective film 126 is aligned with the second protective film 127, which facilitates the simple gluing operation.

In some embodiments, the length of the first protective film 126 or the length of the second protective film 127 is less than or equal to a length of the battery cell 300.

In some embodiments, the width of the first protective film 126 or the width of the second protective film 127 is less than or equal to a width of the battery cell 300.

In the embodiments of the present application, the size of the first protective film 126 or the size of the second protective film 127 is less than or equal to a size of a side surface of the battery cell 300, thereby preventing the first protective film 126 or the second protective film 127 from extending to an area outside the battery cell 300.

In some embodiments, a sum of the thickness of the first protective film 126 and the thickness of the second protective film 127 is defined as D, where D satisfies: 0.1 mm≤D≤2.0 mm. A value of the D can be 0.1 mm, 0.3 mm, 0.6 mm, 0.7 mm, 1.0 mm, 1.2 mm, 1.5 mm, 1.7 mm, 1.9 mm, 2.0 mm, or other unlisted values.

In the embodiments of the present application, the sum of the thickness of the first protective film 126 and the thickness of the second protective film 127 is small, the space occupied inside the battery is small, and a specification of the battery will not be increased due to the first protective film 126 and the second protective film 127.

In some embodiments, referring to FIG. 21, a distance from a wide edge of the first protective film 126 or a wide edge of the second protective film 127 to a wide edge of the battery cell 300 is defined as W, and a distance from a long edge of the first protective film 126 or a long edge of the second protective film 127 to a long edge of the battery cell 300 is defined as L, where the W satisfies: 3.0 mm≤ W≤30.0 mm, and the L satisfies: 3.0 mm≤L≤30.0 mm. A value of the W or the L is 3.1 mm, 4.3 mm, 5.6 mm, 6.7 mm, 7.0 mm, 8.2 mm, 9.5 mm, 10.7 mm, 11.9 mm, 12.0 mm, 14.0 mm, 15.0 mm, 16.5 mm, 17.8 mm, 19.0 mm, 20.0 mm, 21.2 mm, 23.0 mm, 24.5 mm, 26.0 mm, 28.0 mm, 29.0 mm, 30.0 mm, or other unlisted values. The value of the W may be the same or different from the value of the L.

In the embodiments of the present application, a distance between the edges of the first protective film 126 or the second protective film 127 and the edge of the battery cell 300 is small, and an area of the first protective film 126 and the second protective film 127 is large, so that the selectivity of the installation area of the collection member 121 is large, which facilitates the installation of the collecting member 121 and ensures an accuracy of monitoring results.

In some embodiments, any one or a combination of two of the first protective film 126 and the second protective film 127 includes a first end and a second end. The first end is adjacent to a top of the battery cell 300, and the second end is adjacent to a bottom of the battery cell 300. A distance from the first end to the top of the battery cell 300 is less than a distance from the second end to the bottom of the battery cell 300.

In the embodiments of the present application, the signal acquisition device 124 is the top of the battery cell 300. The acquisition member 121 and the signal acquisition device 124 are connected through the connecting lines 1244. If the distance from the first end to the top of the battery cell 300 is set to be less than the distance from the second end to the bottom of the battery cell 300, an overlapping area of the connecting lines 1244 and the first protective film 126 and/or the second protective film 127 is sufficiently large, the probability that the battery cell 300 is damaged by the connecting lines 1244 is reduced, and the reliability of the battery is improved.

In some embodiments, referring to FIG. 21, the signal acquisition device 1244 and the acquisition member 121 are connected through the connecting lines 1244. A part of the connection lines 1244 is disposed between the first protective film 126 and the second protective film 127, and the wiring is simple.

The embodiments of the present application are described in detail above. The principle and implementations of the present application are described in this specification by using specific examples. The description about the foregoing embodiments is merely provided to help understand the method and core ideas of the present application. In addition, persons of ordinary skill in the art can make modifications in terms of the specific implementations and application scopes according to the ideas of the present application. Therefore, the content of this specification shall not be construed as a limit to the present application.

## Claims

1. A cover plate assembly (100), mounted on a housing (200), wherein a battery cell (300) is mounted inside the housing (200), and the cover plate assembly (100) comprising:
a cover plate (110) mounted on the housing (200) and provided with a first mounting hole (111) communicated with the accommodating cavity (210); and
a monitoring assembly (120) comprising an acquisition member (121), a connecting member (122), and a fixing member (123);
wherein the acquisition member (121) is configured to acquire parameter information inside the housing (200), the fixing member (123) is mounted on the cover plate (110) and provided with a second mounting hole (1231) communicated with the first mounting hole (111), one end of the connecting member (122) passes through the first mounting hole (111) and the second mounting hole (1231) to be electrically connected with the acquisition member (121), and another end of the connecting member (122) is exposed to the second mounting hole (1231).

2. The cover plate assembly (100) according to claim 1, wherein the connecting member (122) comprises:
a base part (1221) located inside the second mounting hole (1231);
a first connecting part (1222) connected to one end of the base part (1221) away from the battery cell (300) and exposed to the second mounting hole (1231); and
a second connecting part (1223) connected to another end of the base part (1221) adjacent to the battery cell (300) and extending into the first mounting hole (111), wherein the second connecting part (1223) is configured to electrically connect the acquisition member (121) and the first connecting part (1222).

3. The cover plate assembly (100) according to claim 2, wherein an outer side of the base part (1221) is provided with a first protrusion (1224), the connecting member (122) comprises a first sealing element (1225), and the first sealing element (1225) is sleeved on the outer side of the base part (1221) and is connected between the first protrusion (1224) and the fixing member (123).

4. The cover plate assembly (100) according to claim 3, wherein the fixing member (123) comprises:
a first fixing part (1232) surrounding the base part (1221) and located on a side of the first protrusion (1224) away from the battery cell (300), wherein the first fixing part (1232) is provided with the second mounting hole (1231);
a second fixing part (1233) surrounding the base part (1221) and connected to the cover plate (110); and
a transition part (1234) connected between an outer peripheral edge of the first fixing part (1232) and an inner peripheral edge of the second fixing part (1233), wherein the transition part (1234) is provided with a through hole communicated with the second mounting hole (1231);
wherein the first sealing element (1225) fills the through hole and is laid on outer side surfaces of the first fixing part (1232), the second fixing part (1233), and the transition part (1234).

5. The cover plate assembly (100) according to claim 4, wherein the cover plate (110) is provided with a second sinking part (112) surrounding a periphery of the first mounting hole (111), and the second fixing part (1233) is located inside the second sinking part (112) and welded with the cover plate (110).

6. The cover plate assembly (100) according to any one of claim 1-5, wherein the connecting member (122) and the fixing member (123) are integrally injection molded.

7. The cover plate assembly (100) according to claim 1, wherein the connecting member (122) comprises a plurality of sub-connecting members (122) insulated from each other, the cover plate (110) is provided with a plurality of first mounting holes (111) corresponding to the plurality of sub-connecting members (122), the fixing member (123) is provided with a plurality of second mounting holes (1231) corresponding to the plurality of sub-connecting members (122), one end of each of the sub-connecting members (122) away from the acquisition member (121) is exposed to a corresponding one of the second mounting holes (1231), and another end of each of the sub-connecting members (122) extends into a corresponding one of the first mounting holes (111) to be electrically connected to the acquisition member (121).

8. The cover plate assembly (100) according to claim 7, further comprising:
a second sealing element (113) mounted to the plurality of second mounting holes (1231), wherein the second sealing element (113) is located between the fixing member (123) and the plurality of sub-connecting members (122) and provided with a plurality of first via holes (114); and
a third sealing element (117), wherein the second sealing element (113) is mounted to the plurality of first mounting holes (111), and the second sealing element (113) is located between the plurality of sub-connecting members (122) and the cover plate (110) and provided with a plurality of second via holes (116);
wherein one end of each of the sub-connecting members (122) is exposed to a corresponding one of the first via holes (114), and another end of each of the sub-connecting members (122) extends into a corresponding one of the second via holes (116) to be electrically connected to the acquisition member (121).

9. The cover plate assembly (100) according to claim 8, wherein an outer side of each of the sub-connecting members (122) is provided with a second protrusion (1227) located between the second sealing element (113) and the third sealing element (117).

10. The cover plate assembly (100) according to any one of claims 7-9, wherein the sub-connecting members (122) are metal plug-in members.

11. The cover plate assembly (100) according to claim 1, wherein an aperture of the first mounting hole (111) gradually decreases along a direction from the cover plate (110) toward the acquisition member (121), the cover plate assembly (100) further comprises a fourth sealing element (118) located inside the first mounting hole (111), the fourth sealing element (118) is provided with a third mounting hole (119), the connecting member (122) passes through the third mounting hole (119), and the fixing member (123) covers the fourth sealing element (118).

12. The cover plate assembly (100) according to claim 11, further comprising a lower plastic member (130) provided with a fourth mounting hole (131), wherein a hole wall of the fourth mounting hole (131) is provided with a first sinking part (132), a part of the cover plate (110) is snap-fitted inside the first sinking part (132), and the connecting member (122) passes through the fourth mounting hole (131) to be electrically connected to the acquisition member (121).

13. The cover plate assembly (100) according to claim 11 or claim 12, wherein the connecting member (122) is a circuit board.

14. The cover plate assembly (100) according to any one of claims 1-13, wherein the monitoring assembly (120) further comprises a signal acquisition device (124) disposed on a side of the cover plate (110) adjacent to the acquisition member (121), and the signal acquisition device (124) is connected to the acquisition member (121) and the connecting member (122).

15. The cover plate assembly (100) according to claim 14, wherein the monitoring assembly (120) further comprises a wireless transmitting module (125) connected to the signal acquisition device (124), and the wireless transmitting module (125) is configured to be wirelessly connected to an external battery control system.

16. The cover plate assembly (100) according to claim 15, wherein the wireless transmitting module (125) is located on a side of the connecting member (122) adjacent to the second mounting hole (1231), and the connecting member (122) is connected to the wireless transmitting module (125) and the signal acquisition device (124).

17. The cover plate assembly (100) according to claim 14, wherein the signal acquisition device (124) comprises:
a body (1241) provided with an accommodating space (1242); and
a data processor (1243) disposed inside the accommodation space (1242) and connected to the acquisition member (121) through a connecting line (1244).

18. The cover plate assembly (100) according to claim 17, wherein the signal acquisition device (124) further comprises:
a power source (1245) disposed inside the accommodating space (1242) and electrically connected to the data processor (1243); and/or
the accommodating space (1242) is filled with a sealant.

19. The cover plate assembly (100) according to claim 17, wherein the signal acquisition device (124) further comprises an air pressure sensor (1246) disposed inside the accommodating space (1242) and connected to the data processor (1243), and the air pressure sensor (1246) is configured to acquire an air pressure value inside the housing (200).

20. The cover plate assembly (100) according to claim 19, wherein the body (1241) is provided with a vent hole (1247) and a gas-permeable membrane (1248), the vent hole (1247) is provided on a side of the body (1241) adjacent to an explosion-proof valve (170) of a battery, the gas-permeable membrane (1248) is configured to block the vent hole (1247), and the air pressure sensor (1246) and the vent hole (1247) are opposite to each other.

21. The cover plate assembly (100) according to claim 17, wherein the body (1241) is provided with a snap element, the cover plate (110) is provided with a snap fitting element, and the snap element is snap-connected with the snap fitting element;
or, the body (1241) is a plastic body (1241), and the plastic body (1241) and the cover plate (110) are fixedly connected by hot melting.

22. The cover plate assembly (100) according to claim 14, further comprising:
a pole post (140) mounted on the cover plate (110); and
a connecting sheet (150) disposed on a side of the cover plate (110) facing the battery cell (300), wherein the connecting sheet (150) is configured to connect the pole post (140) and a pole tab of the battery cell (300), a side of the connecting sheet (150) adjacent to the signal acquisition device (124) is provided with a notch (151), and the signal acquisition device (124) is partially located inside the notch (151).

23. The cover plate assembly (100) according to claim 22, wherein the notch (151) is in a flared shape, and an opening size of one end of the notch (151) adjacent to the signal acquisition device (124) is greater than an opening size of another end of the notch (151).

24. The cover plate assembly (100) according to claim 22, wherein an inclination angle of a side wall of the notch (151) on the connecting sheet (150) is defined as a, where a satisfies 3°≤a≤30°.

25. A battery, comprising a housing (200), a battery cell (300), and the cover plate assembly (100) according to any one of claims 1-24, wherein the housing (200) comprises an accommodating cavity (210), and one or more battery cells (300) are mounted inside the accommodating cavity (210).

26. The battery according to claim 25, wherein the acquisition member (121) is attached on the battery cell (300).

27. The battery according to claim 25, wherein the monitoring assembly (120) further comprises a first protective film (126) attached on a side of the battery cell (300), and the acquisition member (121) is fixed on a side of the first protective film (126) away from the battery cell (300).

28. The battery according to claim 27, wherein the acquisition member (121) comprises at least one of a temperature acquisition member (1211), a stress acquisition member (1212), and a gas composition acquisition member (1213).

29. The battery according to claim 27, wherein the acquisition member (121) is disposed in a middle area of the first protective film (126).

30. The battery according to claim 27, wherein the acquisition member (121) comprises a temperature acquisition member (1211), a stress acquisition member (1212), and a gas composition acquisition member (1213), the temperature acquisition member (1211) and the stress acquisition member (1212) are arranged at intervals along a thickness direction of the first protective film (126), and the temperature acquisition member (1211) or the stress acquisition member (1212) is disposed at intervals with the gas composition acquisition member (1213) along a length direction of the first protective film (126).

31. The battery according to claim 27, wherein the monitoring assembly (120) further comprises a second protective film (127) attached on the side of the first protective film (126) away from the battery cell (300), and the acquisition member (121) is disposed between the first protective film (126) and the second protective film (127).

32. The battery according to claim 31, wherein the acquisition member (121) comprises a gas composition acquisition member (1213), the second protective film (127) is provided with a hollow area (1271), and an acquisition end of the gas composition acquisition member (1213) is located inside the hollow area (1271).

33. The battery according to claim 31, wherein the first protective film (126) or the second protective film (127) comprises a polypropylene film layer or a polyimide film layer.

34. The battery according to claim 31, wherein a length of the first protective film (126) is equal to a length of the second protective film (127);
and/or a width of the first protective film (126) is equal to a width of the second protective film (127);
and/or a thickness of the first protective film (126) is equal to a thickness of the second protective film (127).

35. The battery according to claim 31, wherein a length of the first protective film (126) and/or a length of the second protective film (127) is less than or equal to a length of the battery cell (300), and a width of the first protective film (126) and/or a width of the second protective film (127) is less than or equal to a width of the battery cell (300).

36. The battery according to claim 31, wherein a sum of a thickness of the first protective film (126) and a thickness of the second protective film (127) is defined as D, where D satisfies: 0.1 mm≤D≤ 2.0 mm.

37. The battery according to claim 31, wherein a distance from a wide edge of the first protective film (126) or a wide edge of the second protective film (127) to a wide edge of the battery cell (300) is defined as W, and a distance from a long edge of the first protective film (126) or a long edge of the second protective film (127) to a long edge of the battery cell (300) is defined as L, where W satisfies: 3.0 mm≤W≤30.0 mm, and L satisfies: 3.0 mm≤L≤30.0 mm.

38. The battery according to claim 37, wherein the L is equal to the W.

39. The battery according to claim 31, wherein the first protective film (126) and/or the second protective film (127) includes a first end and a second end, the first end is adjacent to a top of the battery cell (300), the second end is adjacent to a bottom of the battery cell (300), and a distance from the first end to the top of the battery cell (300) is less than a distance from the second end to the bottom of the battery cell (300).

40. The battery according to claim 31, wherein the signal acquisition device (124) and the acquisition member (121) are connected through a connecting line (1244), and at least a part of the connection line (1244) is disposed between the first protective film (126) and the second protective film (127).
